# EUROPÄISCHE PATENTSCHRIFT

(11) **EP 0 807 754 B1**
(45) Veröffentlichungstag und Bekanntmachung des Hinweises auf die Patenterteilung: **21.03.2001**
(21) Anmeldenummer: 96117918.1
(22) Anmeldetag: 08.11.1996
(51) Int. Cl.: F02M 27/02, B01J 8/04, C10G 35/06

(54) **Vorrichtung zur Behandlung von aus Mineralöl oder Pflanzen gewonnenen Treib- und Brennstoffen**
Processing device for fuel derived from mineral oil or plants
Dispositif de traitement de carburant dérivé d'huile minérale ou de plantes

(30) Priorität: 14.05.1996 DE 19619454
(43) Veröffentlichungstag der Anmeldung: 19.11.1997
(73) Patentinhaber: G.U.T. GOEMA Gesellschaft für Umwelttechnik GmbH, 70191 Stuttgart (DE)
(72) Erfinder: Koch Christian, D-96155 Buttenheim (DE); Götzelmann Georg, D-70191 Stuttgart (DE); Sterzik Jürgen, D-96049 Bamberg (DE)
(74) Vertreter: Jochem, Bernd, Dipl.-Wirtsch.-Ing.

(56) Entgegenhaltungen:
- DE-U- 9 103 500
- US-A- 4 517 926
- US-A- 4 715 325
- US-A- 4 876 989
- PATENT ABSTRACTS OF JAPAN vol. 7, no. 232 (C-190), 14.Oktober 1983 & JP 58 122984 A (MATSUSHITA DENKI SANGYO), 21.Juli 1983,

## Beschreibung

Die Erfindung betrifft eine Vorrichtung zur Behandlung von aus Mineralöl oder Pflanzen gewonnen Treib- und Brennstoffen mit einer Heizeinrichtung zu deren Erwärmung und einem durchströmbaren Reaktor, enthaltend mindestens ein Reaktorelement, das wenigstens teilsweise an der Oberfläche aus einer Zinnlegierung besteht.

Es ist bekannt, daß man die Verbrennungseigenschaften flüssiger Brenn- und Treibstoffe durch die Bildung von Zündkeimen verbessern kann, die für einen gleichmäßigeren Verbrennungsvorgang und damit für eine Verminderung des Stickoxidausstosses und des Kohlenmonoxidanteils im Abgas sowie bei Dieselöl auch für eine Verringerung der Rußbildung sorgen. Zu diesem Zweck werden dem Brenn- oder Treibstoff bei seiner Herstellung oder beim Tanken Additive zugesetzt. Alternativ können die Additive auch aus einem separaten Tank über eine Dosiereinrichtung dem Kraftstoff oder der Verbrennungsluft beigemischt werden. Nachteilig bei diesen Verfahren ist, daß die Additive teuer und vielfach auch giftig sind. Letzteres ist vor allem bei den besonders wirkungsvollen metallorganischen Stoffen der Fall. Eine Zugabe zum Brenn- oder Treibstoff oder ein Abfüllen als Konzentrat zum Tanken läßt sich deshalb nicht ohne Gefahren realisieren, weil diese giftigen Stoffe in konzentrierter Form hergestellt und gehandelt werden müßten.

Aus der US-A-4 517 926 ist eine Vorrichtung bekannt, die in einem vom Treibstoff durchströmten, mit einer Heizeinrichtung versehenen Gehäuse metallisierte Pellets mit Durchmessern von etwa 0,08 bis etwa 0,3 mm enthält. Die Oberfläche der Pellets besteht aus Edelmetallen, wie z. B. Platin, Nickel, Palladium, Rhenium, aus Karbiden oder Mischungen mit diesen Bestandteilen. Die genannten Materialien sollen als Katalysatoren, nicht als Zündkeime wirken.

Eine andere bekannte Vorrichtung gemäß US-A-4 715 325 enthält als Reaktorelemente verhältnismäßig große Kugeln, bestehend aus 40 - 66 % Kupfer, 2 - 28 % Zink, 5 - 25 % Nickel, 1 - 5 % Zinn, 2 - 12 % Blei, 0,5 - 1,5 % Antimon und weiteren Komponenten mit Anteilen von weniger als 1 %. In dieser Legierung beeinträchtigen die neben Zinn vorhandenen unedelen Metalle dessen positive Wirkung auf die Zündkeimbildung. Außerdem sind die zuletzt genannten Bestandteile giftig.

Es ist auch bereits eine Vorrichtung der eingangs genannten Art bekannt, deren Reaktorelemente aus großen Körnern mit einer Querabmessung von ca. 25 mm aus einer Zinnlegierung bestanden, die als Legierungselemente Quecksilber, Blei und Antimon enthielt. Damit ließ sich zwar der Verbrennungsvorgang positiv beeinflussen, aber eine derartige Vorrichtung kommt für eine breite Anwendung in Kraftfahrzeugen und Heizungen nicht in Frage, weil die giftigen Bestandteile des Reaktors zum Teil über die Abgase in die Atmosphäre gelangen.

Der Erfindung liegt deshalb die Aufgabe zugrunde, eine Vorrichtung der eingangs genannten Art zu schaffen, die hinsichtlich der Verbesserung der Verbrennungseigenschaften zu vergleichbaren Ergebnissen führt, wie die zuletzt genannte bekannte Vorrichtung, aber die Umwelt wesentlich weniger belastet und auch bei breiter Anwendung wesentlich weniger gesundheitsschädlich ist, so daß bei optimaler Auslegung praktisch keine negativen Auswirkungen für Umwelt und Gesundheit auftreten.

Vorstehende Aufgabe wird erfindungsgemäß dadurch gelöst, daß die Zinnlegierung an der Oberfläche des Reaktorelements als zum Zinn hinzugefügtes Legierungselement mit größtem Gewichtsanteil 0,2 - 20 Gew% Kupfer enthält und das Reaktorelement aus einer Vielzahl loser oder miteinander verbundener Körner mit einem Quermaß von höchstens 5 mm besteht. Vorzugsweise enthält die Zinnlegierung an der Oberfläche des Reaktorelements außer den üblichen Verunreinigungen ausschließlich Kupfer mit einem Anteil in den genannten Grenzen. Besonders gute Ergebnisse lassen sich dabei erzielen, wenn der Anteil des Kupfers etwa 2 - 8 Gew% der Zinnlegierung an der Oberfläche des Reaktorelements beträgt. Als optimal hat sich bei den bisherigen Versuchen ein Kupferanteil von etwa 4 - 5 Gew% erwiesen.

Während die Leistungssteigerung der Motoren und die Verbesserung der Abgase bei Verwendung einer erfindungsgemäßen Vorrichtung ohne weiteres zu messen sind, ist der Verbrauch an Reaktormaterial so minimal, daß er sich bisher mit den verfügbaren Meßeinrichtungen noch nicht quantifizieren ließ. Dabei ist zu berücksichtigen, daß sich im praktischen Betrieb Bestandteile aus dem Treib- oder Brennstoff am Reaktor ablagern. Auf jeden Fall übertrifft die mögliche Gebrauchsdauer des vorgeschlagenen Reaktors im Normalfall die Lebensdauer eines Kraftfahrzeugmotors, so daß eine Auswechselung nicht erforderlich ist.

Allein bereits der praktisch nicht meßbare Verbrauch an Reaktormaterial und zusätzlich die Tatsache, daß es sich dabei nur um die gut verträglichen Elemente Zinn und Kupfer handelt, zeigen, daß auch bei breitem Einsatz der vorgeschlagenen Vorrichtung für die ökologisch vorteilhaften Wirkungen der Senkung des Brenn- und Treibstoffverbrauchs und der Verbesserung der Abgase nicht schädliche Nebenwirkungen in Kauf genommen werden müssen. Für die angestrebte positive Wirkung ist es allerdings wesentlich, daß der Treib- oder Brennstoff vor dem Durchströmen des Reaktors mittels der Heizeinrichtung erwärmt wird und die wirksame Oberfläche des Reaktorelements möglichst groß ist. Daher ist erfindungsgemäß vorgesehen, daß die das Reaktorelement bildenden Körner ein Quermaß, d.h. bei runden Körnern einen Durchmesser haben, der höchstens 5 mm beträgt.

Wenn das Reaktorelement in Form einer losen Schüttung der Körner vorliegt, die vorzugsweise ein größtes Quermaß von etwa 1 - 5 mm haben, ist es zweckmäßig, sie in einer Dose aufzunehmen, deren Endwände durch Siebe mit einer kleiner als das größte Quermaß der kleinsten Körner bemessenen Maschenweite gebildet sind. In dieser Form läßt sich das Reaktorelement vorfertigen, lagern und bei der Montage als Bauelement handhaben. In der bevorzugten praktischen Ausführung ist dabei an wenigstens einem Ende der Dose ein inneres Sieb mit relativ größerer Maschenweite und ein äusseres Sieb mit relativ feinerer Maschenweite angeordnet. Um zu gewährleisten, daß der Treib- oder Brennstoff durch die Körnerschüttung strömt, empfiehlt es sich, die Dose mittels wenigstens eines ihren Umfang umgebenden Dichtungsrings in ein äußeres Gehäuse des Reaktors einzusetzen.

In einer alternativen praktischen Ausführungsform besteht das Reaktorelement aus Körnern mit einem größten Quermaß von 0,05 - 1 mm, die zu einem Block zusammengesintert sind. Weil es in diesem Fall Schwierigkeiten bereiten würde, derartig kleine, homogene Körner aus einer Zinnlegierung mit nur verhältnismäßig geringem Kupferanteil so zu sintern, daß das Metall nicht stellenweise zu größeren Ansammlungen zusammenläuft, sondern die Hohlräume zwischen den kleinen Körnern möglichst weitgehend erhalten bleiben, ist in weiterer bevorzugter Ausgestaltung der Erfindung vorgesehen, daß die Körner einen inneren Kern aus Kupfer haben, auf den unter Bildung der Legierung eine Schicht Zinn aufgetragen, z. B. aufgedampft ist. Selbst bei diesem Herstellungsverfahren ist darauf zu achten, daß nicht zuviel Zinn aufgedampft wird, um das erwähnte Verlaufen beim Sintern zu vermeiden. Außerdem wäre eine reine Zinn-Oberfläche des Reaktors bei weitem nicht so wirksam, wie die oben angegebene Zinnlegierung. Obgleich bisher der Wirkungsmechanismus des Reaktors noch nicht ergründet ist, besteht vermutlich ein Zusammenhang zwischen der Menge der beim Durchströmen des Reaktors durch chemische Reaktionen mit Anlagerung von Zinnatomen an Kohlenwasserstoffmoleküle des Brenn- oder Treibstoffs gebildeten Zinnorganika und der Schmelztemperatur der Zinnlegierung, die bei einem Kupferanteil von 4 - 5 % optimal niedrig ist und sowohl mit höherem Kupfergehalt als auch mit einem höheren Zinnanteil als 95 - 96 % ansteigt.

Um ein Reaktorelement, insbesondere einen Sinterblock, mit einer Oberfläche aus einer wirksamen Zinn-Kupfer-Legierung zu erhalten, können die Körner auch einen inneren Kern aus Zinnoxid und Kupferoxid haben. In diesem Fall läßt sich eine Oberflächenschicht aus der angegebenen Zinn-Kupfer-Legierung gewinnen, indem die Körner z. B. in einem Wasserstoffstrom oberflächlich reduziert und durch Erwärmung über den Schmelzpunkt der reduzierten Oberflächenschicht die Legierung hergestellt wird.

Zur Erwärmung des Treib- oder Brennstoffs enthält die erfindungsgemäß vorgesehene Heizeinrichtung zweckmäßigerweise PTC(Positive Temperature Coefficient)-Heizelemente. Es wurde gefunden, daß der Erfolg um so besser ist, je höher im Einzelfall unter Berücksichtigung der dort jeweils gegebenen Randbedingungen, wie z. B. Vermeidung von Gasblasen, Erhalt der Schmierfähigkeit usw., die Temperatur des Treib-oder Brennstoffs im Reaktor sein kann. Die PTC-Heizelemente werden zweckmäßigerweise im Flüssigkeitsstrom vor dem Reaktor angeordnet, so daß der Treib- oder Brennstoff bereits beim Eintritt in den Reaktor die optimal hohe Temperatur hat. Wenn die erfindungsgemäße Vorrichtung Teil einer Treibstoffleitung und vor einer Einspritzpumpe oder einem Vergaser angeordnet ist, wird man im Normalfall die Heizeinrichtung für eine Erwärmung des Treibstoffs vor Eintritt in den Reaktor auf etwa 40 - 80° C bei Benzin oder 50 - 200° bei Dieselöl auslegen. Dabei empfiehlt es sich, einen Treibstofffilter in Strömungsrichtung vor der Heizeinrichtung, auf jeden Fall aber vor dem Reaktor anzubringen. Es wurde nämlich festgestellt, daß ein hinter dem Reaktor angeordneter Kraftstofffilter eine Verringerung der Reaktorwirkung zur Folge hat. Dieser negative Effekt ist möglicherweise auf eine chemische Reaktion des behandelten Treibstoffs mit Ablagerungen im Filter zurückzuführen. Ebenfalls wegen weiterer chemischer Reaktionen des behandelten Treibstoffs, die im Laufe der Zeit die Wirkung der Behandlung abschwächen, hat es sich als zweckmäßig erwiesen, ihn unmittelbar nach der Behandlung der Verbrennung zuzuführen und nicht etwa bei der Herstellung zu behandeln und dann im behandelten Zustand längere Zeit zu lagern.

Bei weiteren Untersuchungen wurde überraschend gefunden, daß mittels der erfindungsgemäßen Vorrichtung auch sog. Bioöle, wie z. B. Raps- oder Sonnenblumenöl, die sich bisher nicht zur Herstellung von Treib- oder Brennstoffen eigneten, hierzu gemacht werden können. Zu diesem Zweck weist die erfindungsgemäße Vorrichtung in Fließrichtung vor dem Reaktor einen Katalysator auf, der vorzugsweise zwischen der Heizeinrichtung und dem Reaktor angeordnet und mit einer weiteren Heizeinrichtung versehen ist, durch die er während des Betriebs auf eine Temperatur von ca. 400° C erwärmt wird. Der Katalysator kann z. B. aus einem wabenförmigen, durchströmbaren Trägerkörper aus Cordierit, der mit einem geeigneten Katalysatormaterial, z. B. LaCoO₃, beschichtet ist, bestehen. In dem Katalysator findet bei der genannten Temperatur ein Crackvorgang statt, bei dem die langen Molekülketten des Bioöls in kürzere Kettenkohlenwasserstoffe umgewandelt werden, deren Brenneigenschaften anschließend durch die Behandlung in dem erfindungsgemäß vorgeschlagenen Reaktor so verbessert werden, daß das Endprodukt der Behandlung unmittelbar im Anschluß daran als Brenn- oder Treibstoff benutzt werden kann.

Ein besonderer Vorteil der vorgeschlagenen Anordnung des Katalysators und des Reaktors in Strömungsrichtung hintereinander besteht darin, daß die für das Cracken im Katalysator erforderliche Erwärmung des Bioöls gleichzeitig auch für die Behandlung im Reaktor ausnutzt werden kann. Da die im Katalysator erforderliche Temperatur wesentlich höher ist als die für den Reaktor gebrauchte Temperatur, ist in bevorzugter Ausführung der Erfindung in der Brenn- oder Treibstoffleitung in Strömungsrichtung hinter dem Katalysator und/oder hinter dem Reaktor ein Wärmetauscher angeordnet, der einerseits von dem bereits im Katalysator behandelten, andererseits von dem noch im Katalysator zu behandelnden Brenn- oder Treibstoff durchströmt ist. Zweckmäßigerweise ist wenigstens ein Wärmetauscher mit einem Dampfabscheider versehen, der an eine Luft-Ansaugleitung des Brenners oder Motors angeschlossen ist.

Nachstehend werden Ausführungsbeispiele der Erfindung anhand der beiliegenden Zeichnung näher erläutert. Es zeigen:
- Fig. 1: einen Längsschnitt durch eine Vorrichtung zur Behandlung von Treibstoff;
- Fig. 2: einen Längsschnitt durch eines der Reaktorelemente des Reaktors nach Fig. 1 und
- Fig. 3: einen Längsschnitt durch eine Vorrichtung ähnlich Fig. 1 mit einem vorgeschalteten Katalysator.

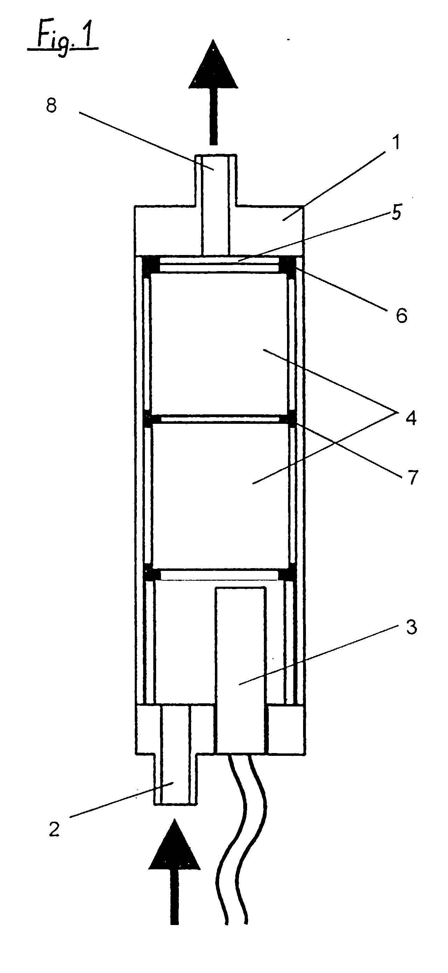

Der in Fig. 1 dargestellte Reaktor hat ein Gehäuse 1 mit einer Einlaßöffnung 2 an dem mit Bezug auf Fig. 1 unteren Ende. Dort befindet sich im Inneren des Reaktorgehäuses 1 eine Heizeinrichtung 3, z. B. in Form von PTC-Heizelementen, die ohne aufwendige Regelung für Erwärmung des durch die Einlaßöffnung 2 in das Reaktorgehäuse 1 einströmenden Treibstoffs auf eine bestimmte Temperatur von z. B. 70° C sorgen. Die Heizeinrichtung 3 könnte alternativ auch mit einem im Motor oder einer Heizung erwärmten Heizfluid betrieben werden.

Im Beispielsfall sind in das Reaktorgehäuse 1 in Reihe hintereinander zwei Reaktorelemente 4 eingesetzt. In Strömungsrichtung dahinter befindet sich ein Feinsieb 5, das die Behandlungskammer im Reaktorgehäuse 1 mit Bezug auf Fig. 1 nach oben hin abschließt. Die Reaktorelemente 4 sind mittels Umfangsdichtungen 6 und 7 in der Behandlungskammer gegenüber dem Reaktorgehäuse 1 so abgedichtet, daß am Umfang kein Strömungsspalt entsteht. Der Treibstoff ist daher gezwungen, von der Einlaßöffnung 2 durch die Reaktorelemente 4 hindurch zu einer an dem mit Bezug auf Fig. 1 oberen Ende des Reaktorgehäuses 1 befindlichen Auslaßöffnung 8 zu strömen.

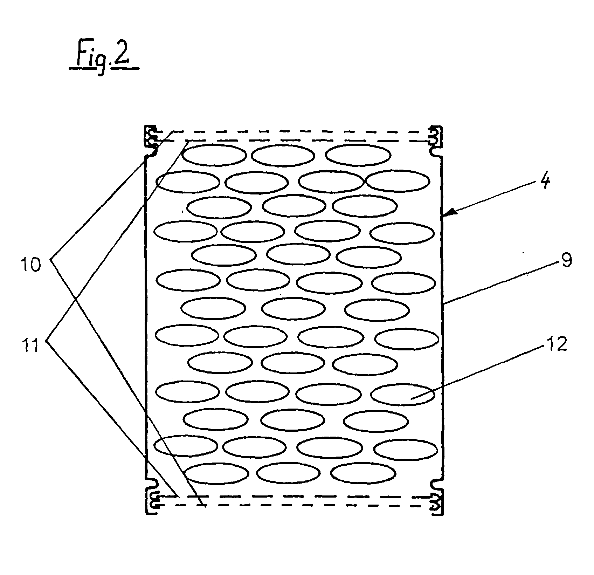

Fig. 2 zeigt eines des Reaktorelemente 4 der Vorrichtung nach Fig. 1 in größerem Maßstab. Es besteht aus einer dosenförmigen Umhüllung 9 und jeweils zwei Sieben 10, 11 an dem mit Bezug auf Fig. 2 unteren und oberen Stirnende. Die beiden Siebe 10, 11 unterscheiden sich in ihrer Maschenweite, die bei dem Sieb 11 grob und bei dem Sieb 10 fein ist. Sie kann z. B. bei dem Sieb 11 0,5 - 3 mm betragen und bei dem Sieb 10 0,01 - 0,15 mm. Der von der Umhüllung 9 und den Sieben 10, 11 begrenzte Innenraum ist gefüllt mit körnigen Reaktorteilchen 12, die im gezeichneten Beispielsfall eine pastillenartige Form haben. Sie bestehen aus einer Legierung mit 80 - 99,8 % Zinn und 0,2 - 20 % Kupfer. Ihr Größtmaß, d.h. ihr größter Durchmesser, beträgt etwa 1 - 5 mm. Die Körner bzw. Reaktorteilchen 12 befinden sich in loser Schüttung in der Umhüllung 9. Sie werden vorzugsweise nach dem Einfüllen zur Beseitigung von Oxiden erst in eine organische Säure, z. B. Ameisen-, Essig- oder Oxalsäure, getaucht und dann in Heizöl oder Benzin. Nach dieser Vorbehandlung sind die Reaktorelemente 4 lagerfähig und einbaufertig.

Bei einer praktischen Ausführungsform hat das Reaktorgehäuse 1 einen inneren Durchmesser von 70 mm und eine Länge von 200 mm. Die Ein- und Auslaßöffnungen 2, 8 haben eine lichte Weite von 10 mm. Die Heizeinrichtung 3 mit PTC-Heizelementen erreicht eine maximale Temperatur von 120° C und hat eine Heizleistung von 140 W. Die Umhüllung 9 der Reaktorelemente 4 besteht aus Aluminium. Ihr Außendurchmesser beträgt 66 mm und ihre Länge 45 mm. Die flachen Reaktorteilchen 12 bestehen aus einer Legierung von 96 Gew% Zinn und 4 Gew% Kupfer und haben 3 mm Durchmesser. Die Maschenweite der inneren Siebe 11 beträgt 1 mm und die der Siebe 10 0,08 mm. Das noch feinere Sieb 5 vor der Auslaßöffnung 8 hat eine Maschenweite von 0,04 mm. Die Reaktorelemente 4 sind vor ihrem Einbau in das Reaktorgehäuse 1 nacheinander in Essigsäure und dann Dieselöl getaucht worden. In der praktischen Ausführung sind drei Reaktorelemente 4 in Reihe hintereinander vorgesehen. Die Dichtungen 6, 7 zwischen den Umhüllungen 9 und dem Reaktorgehäuse 1 sind Dichtungsringe aus Gummi, die einen Außendurchmesser von 70 mm und einen Innendurchmesser von 65 mm haben.

Bei einem nicht zeichnerisch dargestellten Ausführungsbeispiel sind die Körner bzw. Reaktorteilchen 12 im Durchmesser nur 0,5 mm groß. Sie haben einen Kern aus Kupfer und sind auf der Oberfläche mit Zinn bedampft. Da eine Zinn-Kupfer-Legierung einen niedrigeren Schmelzpunkt hat als Kupfer und Zinn jeweils allein, bildet sich beim Aufdampfen von Zinn und wenigstens oberflächlicher Erwärmung der Kupferkerne auf eine Temperatur etwas unterhalb der Schmelztemperatur von Zinn die gewünschte Legierung auf der Oberfläche der Kupferkerne. Die so hergestellten Körner eignen sich zum Sintern. Es lassen sich auf diese Weise poröse Blöcke herstellen, die mit oder ohne Umhüllung 9 mittels Dichtungsringen 6, 7 in ein Reaktorgehäuse 1 eingesetzt werden können. Vor dem Einbau kann ebenfalls eine Spülung mit einer organischen Säure und anschließend mit Benzin oder Dieselöl vorgenommen werden. Der Herstellungsprozeß ist insgesamt etwas teurer als der von Reaktorelementen 4 mit einer losen Körnerschüttung gemäß Fig. 2, aber man erreicht wegen der kleineren Körner mit kleineren äußeren Maßen des Reaktorelements dieselbe wirksame Oberfläche wie bei den Reaktorelementen 4 mit loser Körnerschüttung. Daher kann bei Einsatz von Sinterblöcken als Reaktorelemente das rohrförmige Reaktorgehäuse 1 einen Innendurchmesser von z. B. nur 44 mm und eine Länge von 150 mm haben. Es sind Ein-und Auslaßöffnungen 2, 8 mit einer lichten Weite von 6 mm vorgesehen. Die Heizeinrichtung 3 enthält wiederum PTC-Heizelemente mit einer maximalen Temperatur von 120° C, wobei in dem Fall die Heizleistung 45 W beträgt. Es sind nur zwei Reaktorkörper in Form der genannten Sinterblöcke vorhanden.

Bei einem gegenüber dem zuletzt genannten Ausführungsbeispiel abgewandelten Reaktor bestehen die beiden Reaktorkörper aus einer Aluminiumhülle von 40 mm Außendurchmesser und 35 mm Länge mit einer Füllung, die jeweils aus einem Sinterblock besteht, der aus Zinn- und Kupferoxidteilchen von etwa 0,3 mm Durchmesser gewonnen wurde. Das Gewichtsverhältnis von Zinnoxid zu Kupferoxid betrug dabei etwa 98 zu 2. Das Material wurde bei 1.100° C gesintert und hat eine Wasseraufnahme von etwa 30 %. Die Sinterblöcke wurden im Wasserstoffstrom bei 300° C über 30 Min. oberflächlich reduziert. Danach wurden die Reaktorelemente vor ihrem Einbau in das Reaktorgehäuse nacheinander in Essigsäure und Benzin getaucht.

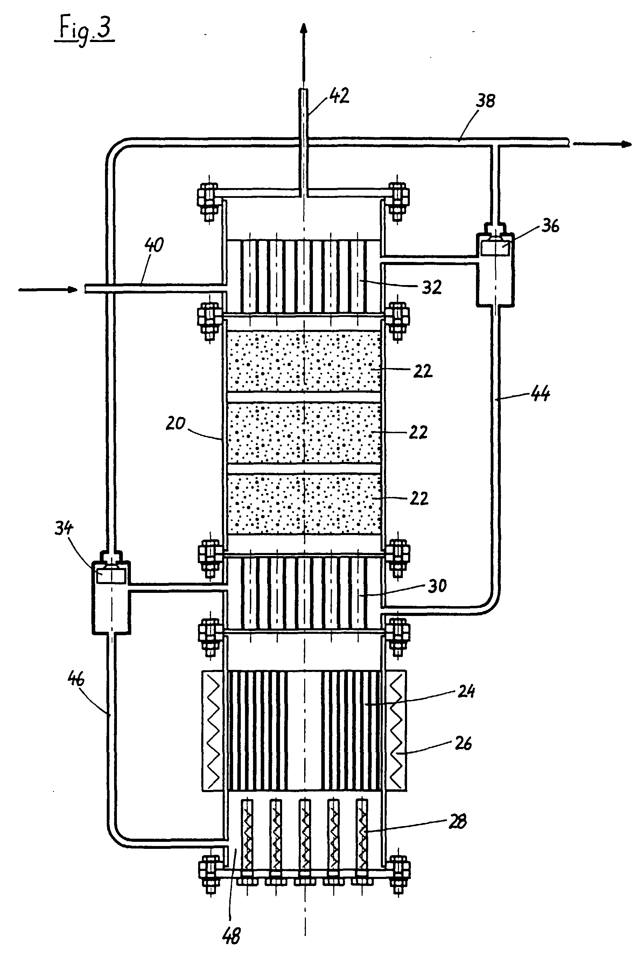

Die in Fig. 3 dagestellte Vorrichtung enthält in einem mehrteiligen Gehäuse 20 einen aus drei Reaktorelementen 22 bestehenden Reaktor. Die Reaktorelemente 22 können wie bei dem Ausführungsbeispiel nach Fig. 1 und 2 innerhalb einer Umhüllung und zwischen endseitigen Sieben jeweils eine lose Schüttung körnigen Reaktormaterials, bestehend aus einer Zinn-Kupfer-Legierung mit den oben angegebenen Legierungsanteilen enthalten. Alternativ können die Reaktorelemente 22 aber auch Sinterblöcke sein, die z. B. aus mit Zinn bedampften und dann gesinterten Kupferkörnern bestehen. Diese Sinterblöcke können entweder unmittelbar in das Gehäuse 20 eingesetzt sein oder zunächst in Umhüllungen, die dann in das Reaktorgehäuse 20 eingesetzt werden.

In Reihe mit den Reaktorelementen 22 und in Strömungsrichtung vor diesen ist ein Katalysator 24 im Strömungsweg des zu behandelnden Rapsöls angeordnet. Der Katalysator 24 ist ein Wabenkatalysator aus mit LaCoO3 beschichtetem Cordierit und dient zum Cracken der langen Molekülketten des Rapsöls und zur Reduzierung seines Sauerstoffgehaltes. Es wird während des Betriebs mittels einer an ihm angebrachten Heizeinrichtung 26 auf eine Temperatur von ca. 400° aufgeheizt. In Strömungsrichtung vor dem Katalysator 24 ist außerdem eine Heizeinrichtung 28 mit einer Vielzahl von PTC-Heizelementen vorgesehen. Weiterhin hat die in Fig. 3 gezeigte Vorrichtung einen ersten Wärmetauscher 30 zwischen dem Katalysator 24 und den Reaktorelementen 22 sowie einen zweiten Wärmetauscher 32 in Strömungsrichtung hinter den Reaktorelementen 22.

Die Wärmetauscher 30 und 32 sind auslaßseitig jeweils an einen Dampfabscheider 34 bzw. 36 angeschlossen, der jeweils mit einer zur Luft-Ansaugleitung eines nicht gezeigten Brenners führenden Dampfleitung 38 verbunden ist.

Bei der dargestellten Vorrichtung wird das zu behandelnde Rapsöl oder ein anderes aus Pfanzen gewonnenes Öl über eine Zufuhrleitung 40 in den Wärmetauscher 32 eingeleitet und nimmt damit Wärme von dem aus den Reaktorelementen 22 strömenden, fertig behandelten Brennöl auf, welches nach dem Durchströmen des Wärmetauschers 32 über eine Leitung 42 zum nicht gezeigten Brenner fließt.

Das bereits im Wärmetauscher 32 vorgewärmte Rapsöl wird über eine Leitung 44, an welcher der Dampfabscheider 36 angeordnet ist, zu dem noch heißeren Wärmetauscher 30 zwischen dem Katalysator 24 und den Reaktorelementen 22 geführt. Das dort noch weiter aufgeheizte Rapsöl verläßt den Wärmetauscher 30 über eine Leitung 46, an welcher der Dampfabscheider 34 angeordnet ist, der ebenfalls mit der Leitung 38 zur Ableitung des im Wärmetauscher gebildeten Dampfes verbunden ist. Die Leitung 46 führt das Rapsöl oder sonstige Rohöl in einen Vorraum 48 des Wabenkatalysators 24, wo die Heizeinrichtung 28 das bisher in den Wärmetauschern vorgewärmte Rohöl noch weiter erwärmt, bevor es in den Katalysator 24 eintritt. Durch dessen Beheizung mittel der zusätzlichen Heizeinrichtung 26 erreicht das Rohöl im Katalysator 24 eine Temperatur von etwa 400° C. Dabei werden die langen Molekülketten des Rohöls gecrackt, und der Sauerstoffgehalt wird reduziert. Das so behandelte, noch heiße Öl wird anschließend im Wärmetauscher 30 gekühlt, hat aber beim Eintritt in die Reaktorelemente 22 immer noch eine Temperatur von z. B. etwa 200° C. Der Reaktor erzeugt in dem Brennöl genügend Zündkeime, so daß es, wenn es nach Durchströmen des Wärmetauschers 32 über die Leitung 42 das Reaktorgehäuse 20 verläßt, für eine ausreichend saubere Verbrennung oder als Treibstoff geeignet ist.

## Patentansprüche

1. Vorrichtung zur Behandlung von aus Mineralöl oder Pflanzen gewonnenen Treib- und Brennstoffen mit einer Heizeinrichtung (3, 28) zu deren Erwärmung und einem durchströmbaren Reaktor (1, 20), enthaltend mindestens ein Reaktorelement (4, 22), das wenigstens teilweise an der Oberfläche aus einer Zinnlegierung besteht, **dadurch gekennzeichnet**, daß die Zinnlegierung an der Oberfläche des Reaktorelements (4, 22) als zum Zinn hinzugefügtes Legierungselement mit größtem Gewichtsanteil 0,2 - 20 Gew% Kupfer enthält und das Reaktorelement (4, 22) aus einer Vielzahl loser oder miteinander verbundener Körner (12) mit einem Quermaß von höchstens 5 mm besteht.

2. Vorrichtung nach Anspruch 1, **dadurch gekennzeichnet**, daß die Zinnlegierung an der Oberfläche des Reaktorelements (4, 22) ausschließlich 0,2 - 20 Gew% Kupfer und die üblichen Verunreinigungen enthält.

3. Vorrichtung nach Anspruch 1 oder 2, **dadurch gekennzeichnet**, daß der Anteil des Kupfers etwa 2 - 8 Gew% der Zinnlegierung an der Oberfläche des Reaktorelements (4, 22) beträgt.

4. Vorrichtung nach Anspruch 3, **dadurch gekennzeichnet**, daß der Anteil des Kupfers etwa 4 - 5 Gew% der Zinnlegierung an der Oberfläche des Reaktorelements (4, 22) beträgt.

5. Vorrichtung nach einem der Ansprüche 1 - 4, **dadurch gekennzeichnet**, daß das Reaktorelement (4, 22) durch eine lose Schüttung von Körnern (12) mit einem größten Quermaß von etwa 1 - 5 mm gebildet ist.

6. Vorrichtung nach Anspruch 5, **dadurch gekennzeichnet**, daß das Reaktorelement (4, 22) in einer dosenförmigen Umhüllung (9) aufgenommen ist, deren Endwände durch Siebe (10, 11) mit einer kleiner als das größte Quermaß der kleinsten Körner (12) bemessenen Maschenweite gebildet sind.

7. Vorrichtung nach Anspruch 6, **dadurch gekennzeichne**t, daß an wenigstens einem Ende der Dose (9) ein inneres Sieb (11) mit relativ größerer Maschenweite und ein äußeres Sieb (10) mit relativ feinerer Maschenweite angeordnet sind.

8. Vorrichtung nach Anspruch 7, **dadurch gekennzeichnet**, daß das innere Sieb (11) eine Maschenweite zwischen 0,5 und 3 mm und das äußere Sieb (10) eine Maschenweite zwischen 0,01 und 0,15 mm hat.

9. Vorrichtung nach einem der Ansprüche 6 - 8, **dadurch gekennzeichnet**, daß die Dose (9) mittels wenigstens eines ihren Umfang umgebenden Dichtungsrings (6, 7) in ein äußeres Gehäuse (1, 20) des Reaktors eingesetzt ist.

10. Vorrichtung nach einem der Ansprüche 1 - 4, **dadurch gekennzeichnet**, daß das Reaktorelement (4, 22) aus Körnern (12) mit einem größten Quermaß von etwa 0,05 - 1 mm besteht, die zu einem Block zusammengesintert sind.

11. Vorrichtung nach einem der Ansprüche 1 - 10, **dadurch gekennzeichnet,** daß die Körner (12) einen inneren Kern aus Kupfer haben, auf den unter Bildung der Legierung eine Schicht Zinn aufgetragen, z. B. aufgedampft ist.

12. Vorrichtung nach einem der Ansprüche 1 bis 10, **dadurch gekennzeichnet,** daß die Körner (12) einen inneren Kern aus Zinnoxid und Kupferoxid haben, auf dem eine mittels eines Reduktionsvorgangs und einer Wärmebehandlung erzeugte Oberflächenschicht aus der Zinn-Kupfer-Legierung vorhanden ist.

13. Vorrichtung nach einem der Ansprüche 1 - 12, **dadurch gekennzeichnet,** daß die Heizeinrichtung (3, 28) PCT-Heizelemente enthält.

14. Vorrichtung nach einem der Ansprüche 1 - 13, **dadurch gekennzeichnet,** daß sie Teil einer Treibstoffleitung vor einer Einspritzpumpe oder einem Vergaser ist und die Heizeinrichtung (3) für eine Erwärmung des Treibstoffs vor Eintritt in das Reaktorelement (4) auf etwa 40 - 80° C bei Benzin oder 50 - 200° C bei Dieselöl ausgelegt ist.

15. Vorrichtung nach einem der Ansprüche 1 - 13, **dadurch gekennzeichnet,** daß sie Teil einer Brenn- oder Teibstoffleitung vor einem Brenner oder einer Motor-Einspritzpumpe ist und in Fließrichtung vor dem Reaktor (22) ein Katalysator (24) angeordnet ist.

16. Vorrichtung nach Anspruch 15, **dadurch gekennzeichnet,** daß der Katalysator (24) zwischen der Heizeinrichtung (28) und dem Reaktor (22) angeordnet ist.

17. Vorrichtung nach Anspruch 15 oder 16, **dadurch gekennzeichnet,** daß der Katalysator (24) mit einer weiteren Heizeinrichtung (26) versehen ist, durch welche er während des Betriebs auf eine Temperatur von ca. 400° C erwärmbar ist.

18. Vorrichtung nach einem der Ansprüche 15 - 17, **dadurch gekennzeichnet,** daß der Katalysator (24) aus einem wabenförmigen, durchströmbaren Trägerkörper aus Cordierit, der mit einem Katalysatormaterial beschichtet ist, besteht.

19. Vorrichtung nach Anspruch 18, **dadurch gekennzeichnet,** daß das Katalysatormaterial LaCoO3 ist.

20. Vorrichtung nach einem der Ansprüche 15 - 19, **dadurch gekennzeichnet,** daß in der Brenn- oder Treibstoffleitung in Strömungsrichtung hinter dem Katalysator (24) und/oder hinter dem Reaktor (22) ein Wärmetauscher (30, 32) angeordnet ist, der einerseits von dem bereits im Katalysator (24) behandelten, andererseits von dem noch im Katalysator (24) zu behandelnden Brenn- oder Treibstoff durchströmt ist.

21. Vorrichtung nach Anspruch 20, **dadurch gekennzeichnet**, daß wenigstens ein Wärmetauscher (30, 32) mit einem Dampfabscheider (34, 35) versehen ist, der an eine Luft-Ansaugleitung des Brenners oder Motors angeschlossen ist.

## Claims

1. A device for the treatment of engine and heating fuels obtained from mineral oil or plants, having a heating device (3, 28) for heating them and a reactor (1, 20) through which a flow can pass and containing at least one reactor element (4, 22) which consists at least partially of a tin alloy on the surface, characterized in that the tin alloy on the surface of the reactor element (4, 22) contains 0.2 to 20 weight-% of copper as the alloy element with the largest proportion by weight added to the tin, and that the reactor element (4, 22) consists of a plurality of granules (12) which are loose or attached to each other and have a diameter of at most 5 mm.

2. The device in accordance with claim 1, characterized in that the tin alloy on the surface of the reactor element (4, 22) exclusively contains 0.2 to 20 weight-% of copper and the usual impurities.

3. The device in accordance with claim 1 or 2, characterized in that the proportion of copper is approximately 2 to 8 weight-% of the tin alloy on the surface of the reactor element (4, 22).

4. The device in accordance with claim 3, characterized in that the proportion of copper is approximately 4 to 5 weight-% of the tin alloy on the surface of the reactor element (4, 22).

5. The device in accordance with one of claims 1 to 4, characterized in that the reactor element is constituted by a loose bulk fill of granules (12) of a greatest transverse dimension of approximately 1 to 5 mm.

6. The device in accordance with claim 5, characterized in that the reactor element (4, 22) is contained in a can-shaped envelope (9), whose end walls are formed by screens (10, 11) of a mesh width which is less than the greatest transverse dimension of the smallest granules (12).

7. The device in accordance with claim 6, characterized in that an inner screen (11) of relatively larger mesh width and an outer screen (10) of relatively smaller mesh width are disposed on at least one end of the can (9)

8. The device in accordance with claim 7, characterized in that the inner screen (11) has a mesh width between 0.5 and 3 mm, and the outer screen (10) a mesh width between 0.01 and 0.15 mm.

9. The device in accordance with one of claims 6 to 8, characterized in that the can (9) is inserted in an outer housing (1, 20) of the reactor by means of at least one seal ring (6, 7) surrounding its circumference.

10. The device in accordance with one of claims 1 to 4, characterized in that the reactor element (4, 22) consists of granules (12) of a largest transverse dimension of approximately 0.05 to 1 mm, which are sintered together into a block.

11. The device in accordance with one of claims 1 to 10, characterized in that the granules (12) have an inner core of copper, to which a layer of tin has been applied, for example by vacuum evaporation, at the same time forming the alloy.

12. The device in accordance with one of claims 1 to 10, characterized in that the granules (12) have an inner core of tin oxide and copper oxide, on which a surface layer of the tin-copper alloy is provided, which has been created by means of a reduction process and heat treatment.

13. The device in accordance with one of claims 1 to 12, characterized in that the heating device (3, 28) contains PCT heating elements.

14. The device in accordance with one of claims 1 to 13, characterized in that it is a part of an engine fuel line upstream of an injection pump or a carburetor, and that the heating device (3) is designed for heating the engine fuel prior to entering the reactor element (4) to approximately 40 to 80°C in case of gasoline, or 50 to 200°C in case of Diesel oil.

15. The device in accordance with one of claims 1 to 13, characterized in that it is a part of an engine or heating fuel line upstream of a burner or an engine injection pump, and that a catalyzer (24) is disposed upstream of the reactor (22) in the flow direction.

16. The device in accordance with claim 15, characterized in that the catalyzer (24) is disposed between the heating device (28) and the reactor (22).

17. The device in accordance with claim 15 or 16, characterized in that the catalyzer (24) is provided with a further heating device (26), by means of which it can be heated to a temperature of approximately 400°C during operation.

18. The device in accordance with one of claims 15 to 17, characterized in that the catalyzer (24) consists of a honeycomb-shaped support body of cordierite, which is coated with a catalytic material and through which fuel can flow.

19. The device in accordance with claim 18, characterized in that the catalytic material is LaCoO₃.

20. The device in accordance with one of claims 15 to 19, characterized in that a heat exchanger (30, 32) is disposed in the heating or engine fuel line downstream of the catalyzer (24) in the flow direction and/or downstream of the reactor (30, 32), through which flows heating or engine fuel which, on the one hand, has already been treated in the catalyst (24) and, on the other hand, fuel still to be treated in the catalyzer (24).

21. The device in accordance with claim 20, characterized in that at least one heat exchanger (30, 32) is provided with a steam separator (34, 35), which is connected with an air aspiration line of the burner or engine.

## Revendications

1. Dispositif de traitement de carburants et de combustibles dérivés d'huiles minérales et de plantes comprenant une installation de chauffage (3, 28) pour le chauffer et un réacteur à passage (1, 20) contenant au moins un élément de réacteur (4, 22) dont la surface est au moins partiellement un alliage d'étain,
caractérisé en ce que
• l'alliage d'étain à la surface de l'élément de réacteur (4, 22) contient comme élément d'alliage ajouté à l'étain, du cuivre représentant au plus une partie pondérale de 0,2 - 20 % et
• l'élément de réacteur (4, 22) est formé d'un grand nombre de grains (12) libres ou liés, ayant une dimension transversale au maximum égale à 5 millimètres.

2. Dispositif selon la revendication 1,
caractérisé en ce que
l'alliage d'étain à la surface de l'élément de réacteur (4, 22) contient exclusivement 0,2 - 20 % en poids de cuivre et le reste est formé d'impuretés.

3. Dispositif selon l'une quelconque des revendications 1 ou 2
caractérisé en ce que
la teneur en cuivre correspond à environ 2 - 8 % en poids de l'alliage d'étain à la surface de l'élément de réacteur (4, 22).

4. Dispositif selon la revendication 3,
caractérisé en ce que
la teneur en cuivre représente environ 4 - 5 % en poids de l'alliage d'étain à la surface de l'élément de réacteur (4, 22).

5. Dispositif selon d'une quelconque des revendications 1 à 4,
caractérisé en ce que
l'élément de réacteur (4, 22) est formé par un remblai en vrac de grains (12) dont la plus grande dimension transversale est de l'ordre de 1 - 5 millimètres.

6. Dispositif selon la revendication 5,
caractérisé en ce que
l'élément de réacteur (4, 22) est placé dans une enveloppe (9) en forme de boîte dont les parois d'extrémité sont formées par des tamis (10, 11) ayant une taille de mailles, mesurée, inférieure à la plus grande mesure transversale des plus petits grains (12).

7. Dispositif selon la revendication 6,
caractérisé en ce qu'
au moins à une extrémité de la boîte(9), il y a un tamis intérieur (11) à mailles relativement grandes et un tamis extérieur (10) à mailles relativement petites.

8. Dispositif selon la revendication 7,
caractérisé en ce que
le tamis intérieur (11) a une taille de mailles comprise entre 0,5 et 3 millimètres et le tamis extérieur (10), une taille de mailles comprise entre 0,01 et 0,15 millimètres.

9. Dispositif selon l'une quelconque des revendications 6 à 8,
caractérisé en ce que
la boîte (9) est placée avec au moins un anneau d'étanchéité (6, 7) entourant sa périphérie, dans un boîtier extérieur (1, 20) du réacteur.

10. Dispositif selon l'une quelconque des revendications 1 à 4,
caractérisé en ce que
l'élément de réacteur (4, 22) est formé de grains (12) dont la plus grande dimension transversale est de l'ordre de 0,05 - 1 millimètre, ces grains étant frittés pour former un bloc.

11. Dispositif selon l'une quelconque des revendications 1 à 10,
caractérisé en ce que
les grains (12) ont un noyau en cuivre sur lequel est appliquée, par exemple par dépôt à la vapeur, une couche d'étain pour former l'alliage.

12. Dispositif selon l'une quelconque des revendications 1 à 10,
caractérisé en ce que
les grains (12) ont un noyau en oxyde d'étain et oxyde de cuivre sur lequel on a réalisé une couche superficielle d'un alliage étain - cuivre par une opération de réduction et de traitement thermique.

13. Dispositif selon l'une quelconque des revendications 1 à 12,
caractérisé en ce que
l'installation de chauffage (3, 28) contient des éléments de chauffage PCT.

14. Dispositif selon l'une quelconque des revendications 1 à 13,
caractérisé en ce qu'
il fait partie d'une conduite de carburant en amont d'une pompe d'injection ou d'un carburateur et l'installation de chauffage (3) est conçue pour chauffer le carburant avant son entrée dans l'élément de réacteur (4) à une température de l'ordre de 40 - 80 °C pour l'essence ou 50 - 200 °C pour le gasoil.

15. Dispositif selon l'une quelconque des revendications 1 à 13,
caractérisé en ce qu'
il fait partie d'une conduite de combustible ou de carburant en amont d'un brûleur ou d'une pompe d'injection de moteur et, en amont du réacteur (22) dans le sens de passage, il y a un catalyseur (24).

16. Dispositif selon la revendication 15,
caractérisé en ce que
le catalyseur (24) est prévu entre l'installation de chauffage (28) et le réacteur (22).

17. Dispositif selon l'une quelconque des revendications 15 ou 16,
caractérisé en ce que
le catalyseur (24) est muni d'une autre installation de chauffage (26) qui permet d'en élever la température en cours de fonctionnement jusqu'à environ 400°C.

18. Dispositif selon l'une quelconque des revendications 15 à 17,
caractérisé en ce que
le catalyseur (24) est formé d'un support traversable en nids d'abeille, en cordiérite, revêtu d'un matériau de catalyse.

19. Dispositif selon la revendication 18,
caractérisé en ce que
le matériau de catalyse est LaCoO3.

20. Dispositif selon l'une quelconque des revendications 15 à 19,
caractérisé en ce que
dans la conduite de carburant ou de combustible, dans le sens de passage en aval du catalyseur (24) et/ou en aval du réacteur (22), un échangeur de chaleur (30, 32) est traversé d'une part par le carburant ou combustible déjà traité dans le catalyseur (24) et d'autre part par celui qui doit encore être traité dans le catalyseur (24).

21. Dispositif selon la revendication 20,
caractérisé par
au moins un échangeur de chaleur (30, 32) avec un séparateur de vapeur (34, 35) raccordé à la conduite d'aspiration d'air du brûleur ou du moteur.
